(19) Europäisches Patentamt

European Patent Office

Office européen des brevets

(11) **EP 0 760 145 B1**

(12) **EUROPÄISCHE PATENTSCHRIFT**

(45) Veröffentlichungstag und Bekanntmachung des Hinweises auf die Patenterteilung:
**19.08.1998 Patentblatt 1998/34**

(51) Int Cl.6: **G06T 15/00**, G06T 17/00, G03C 9/02

(21) Anmeldenummer: **95921742.3**

(22) Anmeldetag: **10.05.1995**

(86) Internationale Anmeldenummer:
**PCT/EP95/01774**

(87) Internationale Veröffentlichungsnummer:
**WO 95/31795 (23.11.1995 Gazette 1995/50)**

(54) **VERFAHREN ZUM ERZEUGEN RÄUMLICH WIRKENDER BILDER**

PROCESS FOR PRODUCING SPATIAL-EFFECT IMAGES

PROCEDE DE PRODUCTION D'IMAGES EN RELIEF

(84) Benannte Vertragsstaaten:
**AT BE CH DE ES FR GB IE IT LI**

(30) Priorität: **13.05.1994 DE 4416935**

(43) Veröffentlichungstag der Anmeldung:
**05.03.1997 Patentblatt 1997/10**

(73) Patentinhaber: **Terlutter, Rolf**
**30165 Hannover (DE)**

(72) Erfinder: **Terlutter, Rolf**
**30165 Hannover (DE)**

(74) Vertreter: **Wiebusch, Manfred**
**TER MEER STEINMEISTER & PARTNER GbR,**
**Patentanwälte,**
**Artur-Ladebeck-Strasse 51**
**33617 Bielefeld (DE)**

(56) Entgegenhaltungen:
**US-A- 5 036 385        US-A- 5 099 320**

- **FUNKSCHAU FERNSEHEN, Band-, Nr. 2, 1987, R. Börner, "Dreidimensonal ohne Brille"**

**Beschreibung**

Die Erfindung betrifft ein Verfahren zum Erzeugen räumlich wirkender Bilder dreidimensionaler Objekte.

Es ist bekannt, daß auch auf einem zweidimensionalen Bildwiedergabemedium, beispielsweise einem bedruckten Blatt Papier oder einem Bildschirm, der Eindruck räumlicher Tiefe hervorgerufen werden kann, indem auf dem Bildwiedergabemedium ein sogenanntes Parallax-Panoramagramm dargestellt wird, das dann durch ein unmittelbar vor der Bildebene angeordnetes Linsenarray betrachtet wird. Bei dem Parallax-Panoramagramm handelt es sich um eine ebene Darstellung des dreidimensionalen Objekts, die aus mehreren entsprechend dem Linsenraster ineinander verschachtelten Teilbildern besteht. Jedes Teilbild zeigt das Objekt aus einer etwas anderen Ansichtsrichtung, so daß durch die Gesamtheit der Teilbilder die parallaktische Verschiebung der Teile des Objekts bei Betrachtung aus unterschiedlichen Ansichtsrichtungen wiedergegeben wird.

Das Linsenarray dient dazu, die Teilbilder optisch voneinander zu trennen, so daß bei Betrachtung aus einer bestimmten Ansichtsrichtung jeweils nur das zu dieser Ansichtsrichtung gehörende Teilbild erkennbar ist. Hierzu wird das Linsenarray so vor dem Panoramagramm angeordnet, daß die Brennebene der Linsen im wesentlichen mit der Bildebene zusammenfällt. Das von einem einzelnen Punkt in der Bildebene ausgehende Licht wird dann durch die Linsen in ein im wesentlichen paralleles Strahlenbündel gebrochen, das mit der Bildnormalen einen bestimmten Winkel bildet. Ein virtuelles Bild dieses Punktes ist deshalb nur dann erkennbar, wenn das Panoramagramm unter diesem Winkel betrachtet wird. Der Winkel zwischen der Ansichtsrichtung und der Bildnormalen ist nach den Gesetzen der geometrischen Optik durch den Abstand zwischen dem betrachteten Punkt und der optischen Achse der zugehörigen Linse bestimmt. Die gewünschte Zuordnung zwischen den Teilbildern und den Ansichtsrichtungen läßt sich somit dadurch erreichen, daß die Teilbildelemente in geeigneten Positionen in bezug auf das Linsenraster angeordnet werden.

In der Praxis wird zumeist mit einem Linsenarray aus vertikal verlaufenden Zylinderlinsen gearbeitet, und der Betrachtungswinkel wird in der Horizontalen variiert, so daß insbesondere die unterschiedlichen Parallaxen für das linke und das rechte Auge des Betrachters wiedergegeben werden und somit der Eindruck räumlicher Tiefe entsteht.

Das herkömmliche Verfahren zur Herstellung solcher Parallax-Panoramagramme besteht darin, daß das darzustellende Objekt aus den verschiedenen Ansichtsrichtungen fotografiert wird, wobei das Linsenarray unmittelbar vor dem fotografischen Film angeordnet ist. Das Bild des Objekts wird somit bei jeder Einzelaufnahme durch die Zylinderlinsen in eine Schar paralleler Streifen fokussiert, die das betreffende Teilbild darstellen. In den Zwischenräumen zwischen diesen Streifen werden dann bei den Folgeaufnahmen die Teilbilder für die übrigen Ansichtsrichtungen erzeugt. Wenn der entwickelte Film später durch dasselbe oder ein gleiches Linsenarray betrachtet wird, sieht man ein räumliches Bild des Objekts.

Aus US-A-5 099 320 ist ein Verfahren nach dem Oberbegriff des Patentanspruchs 1 bekannt, bei dem das aus mehreren 2D-Teilbildern zusammengesetzte Parallalx-Panoramagramm elektronisch aufbereitet wird. Durch diese Aufbereitung soll in erster Linie die Reihenfolge der 2D-Bildelemente, die zu demselben Element des Objekts gehören, umgekehrt werden, um die durch die Zylinderlinsen des Linsenarrays bewirkte Bildumkehr rückgängig zu machen. Es wird jedoch auch die Möglichkeit erwähnt, die 2D-Bildelemente synthetisch mit Hilfe eines Computerprogramms zu generieren.

In FUNKSCHAU 2/1987, Seiten 36 bis 39, ist vorgeschlagen worden, das oben beschriebene Prinzip für eine dreidimensionale Fernsehbildwiedergabe zu nutzen. Hierzu werden die mit Hilfe von Fernsehkameras erzeugten Teilbilder des Panoramagramms empfängerseitig mit mehreren Projektoren auf einen Großbildschirm projiziert, der mit einem Linsenarray versehen ist.

Aus US-A-5 036 385 ist ein Videobildschirm bekannt, der ebenfalls die Erzeugung dreidimensionaler Bilder mit Hilfe eines Linsenarrays gestattet. Die 2D-Bildelemente werden hier durch mehrere blinkende Lichtquellen erzeugt, die mit Hilfe des Linsenarrays auf dicht benachbarte Bereiche des Bildschirms abgebildet werden. Vor dem Bildschirm ist ein optisches Verschlußelement angeordnet, mit dem sich die Durchlässigkeit des Bildschirms an jedem Rasterpunkt des Bildschirms individuell steuern läßt. Durch geeignete Ansteuerung des Verschlußelements wird ein dreidimensionales Bild erzeugt, indem für das linke und das rechte Auge des Betrachters jeweils nur die zugehörigen 2D-Bildelemente sichtbar gemacht werden.

Aufgabe der Erfindung ist es, ein Verfahren zum Erzeugen räumlicher Bilder anzugeben, durch das dem Techniker oder Designer die Interpretation von Konstruktionszeichnungen erleichtert wird, die beispielsweise mit Hilfe von CAD-Systemen erstellt wurden.

Diese Aufgabe wird erfindungsgemäß mit den im Patentanspruch 1 angegebenen Merkmalen gelöst.

Der Grundgedanke der Erfindung besteht darin, daß anhand der beispielsweise mit Hilfe eines Rechners erzeugten und elektronisch gespeicherten Daten, die die dreidimensionale Struktur des Objekts festlegen, ein synthetisches Parallax-Panoramagramm berechnet wird, das dann auf einem hochauflösenden Bildschirm dargestellt oder mit Hilfe eines hochauflösenden Druckers ausgedruckt und durch ein entsprechendes Linsenarray betrachtet werden kann.

Ein wesentlicher Vorteil dieses Verfahrens besteht darin, daß die elektronisch gespeicherten Daten direkt in ein räumliches Bild umgesetzt werden können, ohne daß hierzu ein reales dreidimensionales Modell angefertigt werden muß. Hierdurch besteht insbesondere auch die vorteilhafte Möglichkeit, verdeckte Strukturen im Inneren des Objekts dreidimensional darzustellen.

Die Auflösung des dreidimensionalen Bildes ist durch das Raster des Linsenarrays bestimmt. Das Auflösungsvermögen des verwendeten Bildwiedergabemediums sollte ein Mehrfaches dieser Auflösung betragen, damit eine entsprechende Anzahl von Teilbildern wiedergegeben werden kann. Mit heutigen Laserdruckern oder Tintenstrahldruckern ist jedoch eine Auflösung erreichbar, die für eine Darstellung dreidimensionaler Bilder mit einem hinreichend feinen Linsenraster ausreicht. Gewisse Einbußen bei der Bild auflösung werden dadurch mehr als wettgemacht, daß der Betrachter sich auf einen Blick einen unmittelbaren Eindruck von der räumlichen Struktur des Objekts verschaffen kann. Hierdurch wird die Interpretation von zusätzlich zur Verfügung gestellten zweidimensionalen Darstellungen wesentlich erleichtert. Dies gilt insbesondere für die perspektivische Darstellung von Objekten mit großer Detailfülle, da es der räumliche Eindruck dem Betrachter erleichtert, die verwirrende Linienvielfalt durch Unterscheidung von Vordergrund und Hintergrund zu strukturieren.

Das Verfahren läßt sich problemlos auch bei mehrfarbigen Darstellungen anwenden, wodurch die Übersichtlichkeit weiter erhöht wird.

Die Anzahl der synthetisch erzeugten Teilbilder beträgt mindestens zwei, entsprechend der Parallaxe zwischen dem linken und dem rechten Auge des Betrachters. In diesem Fall liegen die beiden zugehörigen Ansichtsrichtungen symmetrisch zu der zentralen Ansichtsrichtung. Die Anzahl der Teilbilder und damit der Ansichtsrichtungen kann jedoch auch wesentlich größer sein, so daß der Betrachter beim Bewegen des Kopfes, d.h. wenn er seine Betrachtungsposition gegenüber der ursprünglichen, der zentralen Ansichtsrichtung entsprechenden Position variiert, eine quasi kontinuierliche Parallaxenverschiebung wahrnimmt. Bei einem Array aus Zylinderlinsen gilt dies nur für seitliche Kopfbewegungen, es kann jedoch auch ein Array aus gitter- oder wabenförmig angeordneten sphärischen Linsen verwendet werden, so daß sich auch unterschiedliche Parallaxen in der Vertikalen darstellen lassen.

Der Begriff "Teilbilder" ist in diesem Zusammenhang nicht so zu verstehen, daß ein Teilbild eine komplette Ansicht des gesamten dreidimensionalen Objekts repräsentieren muß, wenn dies aus einer bestimmten Ansichtsrichtung betrachtet wird, sondern der Begriff "Teilbild" bezeichnet vielmehr eine zweidimensionale Darstellung eines bestimmten Ausschnitts oder Elements des dreidimensionalen Objekts für eine bestimmte Ansichtsrichtung. Beispielsweise wird ein dreidimensionales Linienelement des Objekts in mehrere zweidimensionale Linienelemente (Teilbilder) transformiert, die jeweils einer bestimmten Ansichtsrichtung entsprechen. Etwas allgemeiner formuliert wird jeder dreidimensionale Graphikvektor, der eine bestimmte Einzelheit des Objekts repräsentiert, in eine Anzahl zweidimensionaler Graphikvektoren transformiert, die jeweils einer anderen Ansichtsrichtung zugeordnet sind.

Das Verfahren läßt sich mit geringem apparativen Aufwand realisieren, da zu seiner Durchführung außer einem Rechner und einem hochauflösenden Drucker, die in einem Konstruktionsbüro zumeist ohnehin verfügbar sind, lediglich das Linsenarray (z.B. eine Folie) und eine darauf abgestimmte Software benötigt werden.

Gemäß einem wesentlichen Merkmal des erfindungsgemäßen Verfahrens ist die Anzahl der verschiedenen Ansichtsrichtungen und damit die Anzahl der für jedes Elements des Objekts zu erzeugenden 2D-Bildelemente nicht für das gesamte Bild einheitlich festgelegt, sondern sie wird für jedes Element des Objekts individuell in Abhängigkeit davon bestimmt, wie groß das Ausmaß der parallaktischen Verschiebung ist, die der betreffende Teil des Objekts erfährt. Somit ist es möglich, für die Teile des Objekts, die eine große parallaktische Verschiebung erfahren, eine relativ große Anzahl von 2D-Bildelementen vorzusehen, so daß beim Ändern der Betrachtungsposition sprunghafte Übergänge über mehr als ein Pixel (mehr als eine Einzellinse) vermieden werden, während für Teile des Objekts, die sich in der Nähe des Ansichtszielpunktes befinden und somit nur eine geringe parallaktische Verschiebung erfahren, nur eine kleinere Anzahl von 2D-Bildelementen erzeugt wird, so daß der Rechenaufwand minimiert wird und die 2D-Bildelemente mit dem Drucker sauber aufgelöst werden können.

Für die Berechnung des Panoramagramms eines Objektes, das durch eine Menge von Vektoren in einem vorgegebenen dreidimensionalen Koordinatensystem definiert ist, geht man bevorzugt von der Vorstellung aus, daß der Betrachter sich an einem bestimmten Ort in endlicher Entfernung zu dem Objekt befindet und dann seine Betrachtungsposition leicht variiert, wobei der Blick stets auf einen bestimmten Ansichtszielpunkt gerichtet bleibt. Die zentrale Betrachtungsposition und der Ansichtszielpunkt werden nach Vorgaben des Benutzers in dem gegebenen Koordinatensystem festgelegt und bestimmen die zentrale Ansichtsrichtung.

Vorteilhafte Weiterbildungen und Ausgestaltungen des Verfahrens ergeben sich aus den Unteransprüchen.

Es ist zweckmäßig, durch eine Koordinatentransformation $T_{view}$ auf ein kartesisches Koordinatensystem überzugehen, dessen Ursprung im Ansichtszielpunkt liegt und das so gedreht ist, daß eine Koordinatenachse, beispielsweise die z-Achse, auf die zentrale Betrachtungsposition gerichtet ist und die beiden anderen Achsen in Richtung der Breite und Höhe des zweidimensionalen Bildwiedergabemediums verlaufen. Die Änderungen der Ansichtsrichtung entsprechend der Variation der Betrachtungsposition können dann durch Drehungen um einen kleinen Winkel $\beta$ um die Hochachse des transformierten Koordinatensystems beschrieben werden. Die entsprechenden Drehtransformationen werden im folgenden mit $T^{\beta}_{Parallax}$ bezeichnet. Durch ein weitere Transformation $T_{2d}$ werden die so erhaltenen dreidimensionalen Vektoren entsprechend der gewünschten Perspektive in die Ansichtsebene projiziert und in einem vorgegebenen Ansichtsfenster des Bildwiedergabemediums positioniert.

Je nach Gestaltung des Linsenarrays ist es theoretisch denkbar, daß ein- und derselbe Punkt in der Bildebene durch mehrere benachbarte Linsen des Linsenarrays betrachtet werden kann (jeweils unter einem anderen Betrachtungswinkel). Im einfachsten Fall ist das Linsenarray jedoch so gestaltet, daß von jedem Bildpunkt nur durch eine einzige unmittelbar darüberliegende Linse ein virtuelles Bild erzeugt wird. Der maximale Abstand des Bildpunktes von der optischen Achse der zugehörigen Linse ist dann durch die Periode des Linsenrasters begrenzt. Damit ist auch der maximale Winkel zwischen der Betrachtungsrichtung und der Bildnormalen auf einen Wert $\pm\beta_{Parallax}$ begrenzt. Für die Drehtransformationen $T^{\beta}_{Parallax}$ werden deshalb in diesem Fall nur Winkel innerhalb des Intervalls $[-\beta_{Parallax}, +\beta_{Parallax}]$ herangezogen.

In einem typischen Anwendungsfall kann man sich das darzustellende dreidimensionale Objekt beispielsweise als Drahtgittermodell aus geraden Linienelementen zusammengesetzt denken. Die Anfangs- und Endpunkte der Linienelemente sind dann durch die oben genannten Vektoren gegeben. In diesem Fall wird das Panoramagramm bevorzugt nacheinander für die einzelnen Linienelemente berechnet. Für jedes Linienelement wird zunächst die optimale Schrittweite $\Delta\beta$ für die Variation der Ansichtsrichtung innerhalb des oben genannten Intervalls bestimmt. Maßgebliche Parameter hierfür sind die Periode des Linsenrasters und das Ausmaß der parallaktischen Verschiebung, die das Linienelement bei der Änderung der Ansichtsrichtung erfährt. Diese parallaktische Verschiebung kann anhand des Abstands der Endpunkte des Linienelements vom Ansichtszielpunkt abgeschätzt werden.

Je nach Lage des Linienelements im Raum zeigen die Endpunkte der ebenen Projektion im allgemeinen unterschiedlich große parallaktische Verschiebungen. Die ideale Schrittweite $\Delta\beta$ für die Ansichtsrichtung $\beta$, die zu Verschiebungen von exakt einer Periode D des Linsenarrays führt, variiert deshalb für die Orte entlang dem Linienelement und ist von seiner Lage im Raum und dem Winkel $\beta$ der zentralen Ansichtsrichtung abhängig.

Zur Vereinfachung und Beschleunigung der Berechnungen ist es nützlich, die Schrittweite $\Delta\beta$ für das gesamte Linienelement einheitlich zu wählen. Die -Schrittweite $\Delta\beta$ sollte dann so klein sein, daß die parallaktischen Verschiebungen von Teilbild zu Teilbild für alle Orte auf dem Linienelement maximal eine Linsenperiode D betragen. In diesem Fall wird die ebene Projektion des Linienelements zur Ansichtsrichtung $\beta$ entsprechend der Periode D des Linsenarrays gerastert, das heißt, die Projektion des Linienelements wird in eine Anzahl von Teilstücken aufgeteilt, die den von dem Linienelement überstrichenen Zylinderlinsen entsprechen. Das zu einer bestimmten Ansichtsrichtung $\beta$ gehörende Teilbild dieses Linienelements besteht dann aus einzelnen Pixeln oder Teilbildelementen in der Form dünner Linienstücke, die parallel zu den Zylinderlinsen verlaufen und in der hierzu senkrechten Richtung um den Abstand D gegeneinander versetzt sind. Die Positionen dieser Teilbildelemente relativ zu den Brennlinien der Zylinderlinsen können einheitlich aus dem zugehörigen Betrachtungswinkel $\beta$ berechnet werden. Die Länge der Teilbildelemente in der Richtung parallel zu den Zylinderlinsen ist für die inneren Teilbildelemente durch die Steigung des Linienelements gegeben. Für die Teilbildelemente am Anfang und am Ende des Linienelements ist eine gesonderte Berechnung erforderlich, da hier auch die Positionen der Anfangs- und Endpunkte relativ zu den Zylinderlinsen zu berücksichtigen sind.

In einer alternativen Ausführungsform ist es auch möglich, zunächst das zu der zentralen Betrachtungsposition ($\beta = 0$) gehörende Linienelement in eine Anzahl von Teilstücken aufzuteilen und dann die Schrittweite $\Delta\beta$ für jedes Teilstück gesondert zu berechnen. Hierdurch läßt sich beispielsweise erreichen, daß für ein Linienelement, das in dem dreidimensionalen Objekt in der Nähe des Ansichtszielpunktes beginnt und sich von dort in die Tiefe des Raumes erstreckt, die Auflösung, d.h. die Anzahl der Teilbilder, vom Anfangspunkt zum Endpunkt hin zunimmt.

Wenn man eine Betrachtungsposition in endlicher Entfernung zur Bildebene annimmt, so daß die Sichtstrahlen vom Betrachter zu den Endpunkten des Linienelements divergent sind, so sind im allgemeinen die korrekten Positionen der Teilbilder relativ zum Linsenarray auch von der Dicke des Linsenarrays abhängig. Dies läßt sich dadurch berücksichtigen, daß anstelle der tatsächlichen Periode des Linsenarrays eine scheinbare Periode D zugrundegelegt wird, die entsprechend dem Verhältnis zwischen Betrachtungsabstand und Dicke des Linsenarrays korrigiert ist.

Das erfindungsgemäße Verfahren ist nicht auf die Darstellung von Drahtgittermodellen beschränkt. Es ist beispielsweise auch möglich, naturgetreue räumliche Bilder von nicht durchsichtigen Objekten zu erzeugen, indem für jede Ansichtsrichtung jeweils nur die Teilbilder der Linien erzeugt werden, die aus dieser Ansichtsrichtung sichtbar sind.

Ebenso ist es möglich, Objekte mit farbigen Oberflächen darzustellen, indem für die Oberflächen, die in der jeweiligen Ansichtsrichtung sichtbar sind, Teilbilder in der Form paralleler Linien im Raster des Linsenarrays erzeugt werden.

Im folgenden wird ein Ausführungsbeispiel der Erfindung anhand der Zeichnung näher erläutert.

Es zeigen:

Fig. 1 bis 3     die Lagen verschiedener kartesischer Koordinatensysteme in bezug auf ein quaderförmiges Objekt, zur Illustration einer Folge von Koordinatentransformationen;

Fig. 4     Koordinatentransformationen, die die Variation der Ansichtsrichtung (d. h., des Ortes des Betrachters) beschreiben;

Fig. 5      zweidimensionale Abbilder des quaderförmigen Objekts nach Figuren 1 bis 4 für unterschiedliche Ansichtsrichtungen entsprechend Figur 4;

Fig. 6 u. 7      Skizzen zur Erläuterung der Abbildungseigenschaften eines Linsenarrays;

Fig. 8      ein Diagramm zur Erläuterung der Zuordnung zwischen einzelnen Zylinderlinsen des Linsenarrays und zugehörigen Zonen der Bildebene für einen Betrachter in endlicher Entfernung zu der Bildebene;

Fig. 9      ein ebenes Bild eines Linienelements in einem Ansichtsfenster des Bildwiedergabemediums;

Fig. 10      ein zu dem Linienelement nach Figur 9 gehörendes Teilbild, das für eine bestimmte Ansichtsrichtung berechnet und entsprechend dem Linsenarray gerastert ist;

Fig. 11      das Erscheinungsbild des Teilbildes nach Figur 10, wenn es aus der vorgesehenen Betrachtungsrichtung durch das Linsenarray betrachtet wird;

Fig. 12      die Extremlagen des Linienelements nach Figur 9 für eine maximale Variation der Ansichtsrichtung;

Fig. 13      Teilbilder des Linienelements entsprechend Figur 10 für eine Vielzahl diskreter Ansichtsrichtungen;

Fig. 14      die Erscheinungsbilder der Teilbilder nach Figur 13, wenn sie aus der jeweils zugehörigen Ansichtsrichtung durch das Linsenarray betrachtet werden;

Fig. 15      ein Drahtgittermodell eines darzustellenden Objektes in der Form eines Würfels;

Fig. 16      ein für ein Zylinderlinsen-Array mit einer Periode von 0,4 mm berechnetes Panoramagramm des Würfels nach Figur 15 in Originalgröße;

Fig. 17 bis 19      vergrößerte Darstellungen des Panoramagramms nach Figur 16; und

Fig. 20      ein Flußdiagramm zur Erläuterung des erfindungsgemäßen Verfahrens.

Transformationen zur Erzeugung einer konventionellen Ansicht:

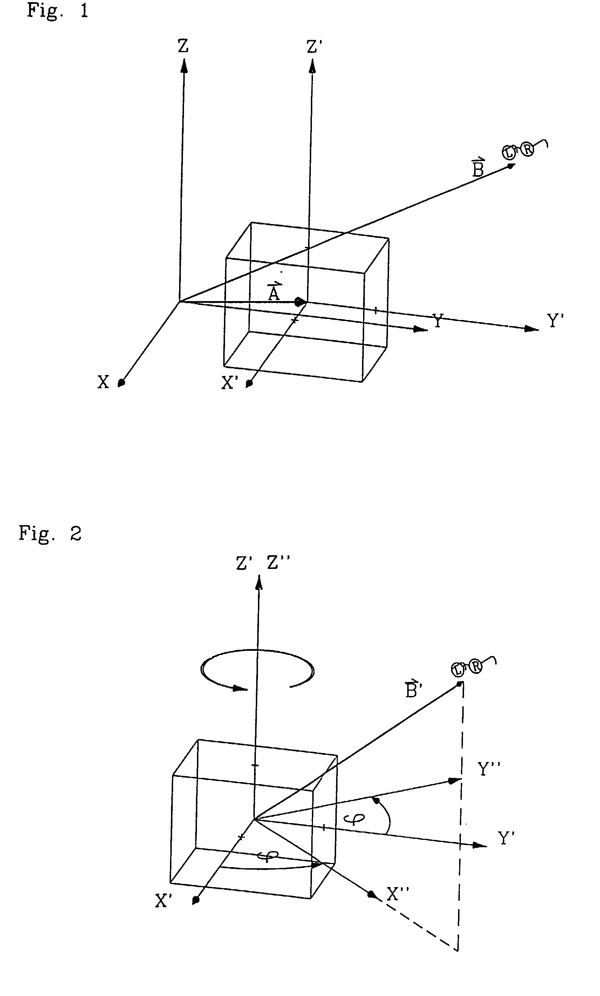

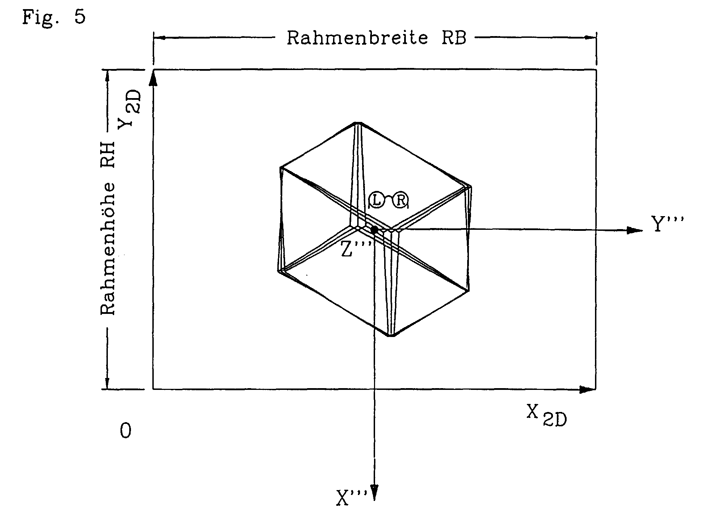

Die Berechnung der graphischen Strukturen zum 3-D-Bild setzt Zeichnungsobjekte voraus, deren geometrischen Daten in vektorieller Form verfügbar gemacht werden können. Fast alle marktüblichen CAD-Programme lassen die Erzeugung von Zeichnungsdateien zu, aus denen die Daten über die Zeichnungsobjekte und der Standort des Betrachters in 3-dimensional vektorieller Form extrahiert werden können.
Die nachfolgenden Rechnungen setzen konkret voraus, daß alle Zeichnungsobjekte aus Serien von geraden Linienelementen aufgebaut sind und die Ortsvektoren für Anfangs- und Endpunkte der Linienstücke, für den Standort des Betrachters und den Zielpunkt der Blickrichtung als Datensatz aus Tripeln vorliegen.
Die Generierung der graphischen Struktur in der Ebene erfordert zuerst eine Ansicht des Zeichnungsobjektes vom Ort des Betrachters und mit dem beabsichtigten Bildausschnitt. Die Figuren 1 bis 5 sollen am Beispiel eines Quaders die konventionellen Verschiebe-, Dreh- und Projektionstransformationen vereinbaren, die von einem Satz 3-dimensionaler Ortsvektoren (Eckpunkte) zu einer 2-dimensionalen Ansichtsprojektion (Fig. 5) führen.

Figur 1:
Übergang vom System S(X,Y,Z) in das System S'(X',Y',Z') durch Verschiebung des Koordinatenursprungs in den Ansichtszielpunkt $\vec{A}$ des Betrachters am Ort $\vec{B}$:

$$\vec{P}' = \vec{P} - \vec{A}$$

für alle Vektoren $\vec{P}$

Figur 2:

Übergang vom System S'(X',Y',Z') nach s"(X",Y",Z") durch positive Drehung der X'- und Y'-Achse um die Z'-Achse um den Winkel φ:

Die entsprechende Drehung der Ortvektoren:

$$\vec{P}'' = \begin{bmatrix} \cos\varphi & \sin\varphi & 0 \\ -\sin\varphi & \cos\varphi & 0 \\ 0 & 0 & 1 \end{bmatrix} \cdot \vec{P}'$$

Bestimmung von φ aus den Komponenten von $\vec{B}'$:

b' x > 0 :
$$\varphi = \arctan(b'_y / b'_x)$$

$b'_y < 0$ :
$$\varphi = \arctan(b'_y / b'_x) + \pi$$

$b'_x = 0$ und $b'_y \neq 0$ :
$$\varphi = \operatorname{sgn}(b'_y) \cdot \frac{\pi}{2}$$

$b'_x = 0$ und $b'_y = 0$:
$$\varphi = -\frac{\pi}{2}$$

Figur 3:

Übergang von S"(X",Y",Z") nach S'" (X'",Y'",Z'") durch positive Drehung der X"- und Z"-Achse um die Y"-Achse um den Winkel e:

Die entsprechende Drehung der Ortsvektoren:

$$\vec{P}''' = \begin{bmatrix} \cos\theta & 0 & -\sin\theta \\ 0 & 1 & 0 \\ \sin\theta & 0 & \cos\theta \end{bmatrix} \cdot \vec{P}''$$

Bestimmung von e aus den Komponenten von $\vec{B}$:

$b'_z > 0$ :
$$\theta = \arctan(\sqrt{b'^2_x + b'^2_y} / |b'_z|)$$

$b'_z < 0$ :
$$\theta = \pi - \arctan(\sqrt{b'^2_x + b'^2_y} / |b'_z|)$$

$b'_z = 0$ :
$$\theta = \frac{\pi}{2} \qquad \text{(konventionell)}$$

Die bisherigen Transformationen überführen die Vektoren in das System S'", in dem die Ansichtsrichtung parallel zur Z'"-Achse verläuft; im Folgenden zusammengefaßt als:

$$T_{view}: \quad \vec{P}''' = \begin{bmatrix} \cos\theta \cdot \cos\varphi & \cos\theta \cdot \sin\varphi & -\sin\theta \\ -\sin\varphi & \cos\varphi & 0 \\ \sin\theta \cdot \cos\varphi & \sin\theta \cdot \sin\varphi & \cos\theta \end{bmatrix} \cdot (\vec{P} - \vec{A})$$

Figur 4:

'Perspektivische' Drehung in S'" (X'",Y'",Z'") um β: (z. B. zur Erzeugung der Ansichten von Orten zwischen dem rechten und linken Auge des fiktiven Betrachters)

$$T^{\beta}_{Parallax}: \quad \vec{P}'''_{\beta} = \begin{bmatrix} 1 & 0 & 0 \\ 0 & \cos \beta & -\sin \beta \\ 0 & \sin \beta & \cos \beta \end{bmatrix} \cdot \vec{P}'''$$

$\beta$ aus dem Intervall $[- \beta_{Parallax}, \beta_{Parallax}]$

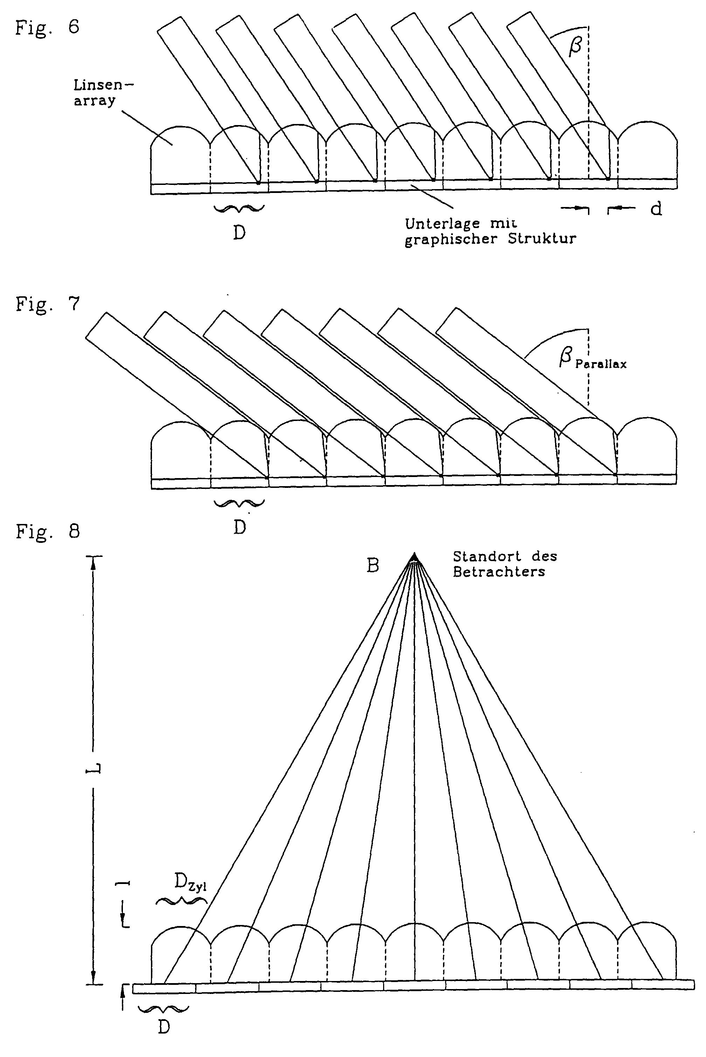

$\beta_{Parallax}$ :   Maximaler Winkel, in den die Bildstrahlen von graphischen Strukturen an den Rändern der Linsen abgelenkt werden können (Fig. 7); eine Eigenschaft der Linsen.

Figur 5:
Projektion der 3-dim. Vektoren in die Ebene der Ansicht:

$$T_{2d}: \quad \vec{P}_{2D} = \begin{bmatrix} X_{2D} \\ Y_{2D} \end{bmatrix} = \begin{bmatrix} 0 & 1 & 0 \\ -1 & 0 & 0 \end{bmatrix} \cdot \vec{P}''' + \begin{bmatrix} 0.5 \cdot RB - X_{zv} \\ 0.5 \cdot RH - Y_{zv} \end{bmatrix}$$

RB, RH :   Rahmenbreite, Rahmenhöhe des Ansichtsfensters.
$X_{ZV}, Y_{ZV}$ :   Horizontale Verschiebung, vertikale Verschiebung des Fensterzentrums bezogen auf die Projektion des Ursprungs von S'''.

Andere Perspektiven als die hier gezeigte Normalperspektive erfordern nur an dieser Stelle andere Formen für $T_{2D}$. Die weiteren Beschreibungen bleiben auch dann gültig.

Abbildungseigenschaften des Linsenarrays:

Zur Vereinfachung der Beschreibung sollen die optischen Eigenschaften des Linsenarrays (Fig. 6) derart idealisiert sein, daß für alle Bildpunkte in den Brennebenen und deren Abbildung die Beziehung

$$d = \frac{1}{2} \cdot \frac{D}{\beta_{Parallax}} \cdot \beta$$

(d proportional $\beta$)

d :   Abstand des Punktes von der Linsenmitte,
$\beta$ :   Ablenkung des Bildstrahles von der Bildnormalen,

gültig ist. Nicht-lineare Funktionen d($\beta$) können an dieser Stelle spezielle Linseneigenschaften beschreiben oder Linsenfehler berücksichtigen und sind mit den nachfolgenden Herleitungen verträglich.

Funktionsweise der Bilderzeugung und der 3-D-Bildwirkung:

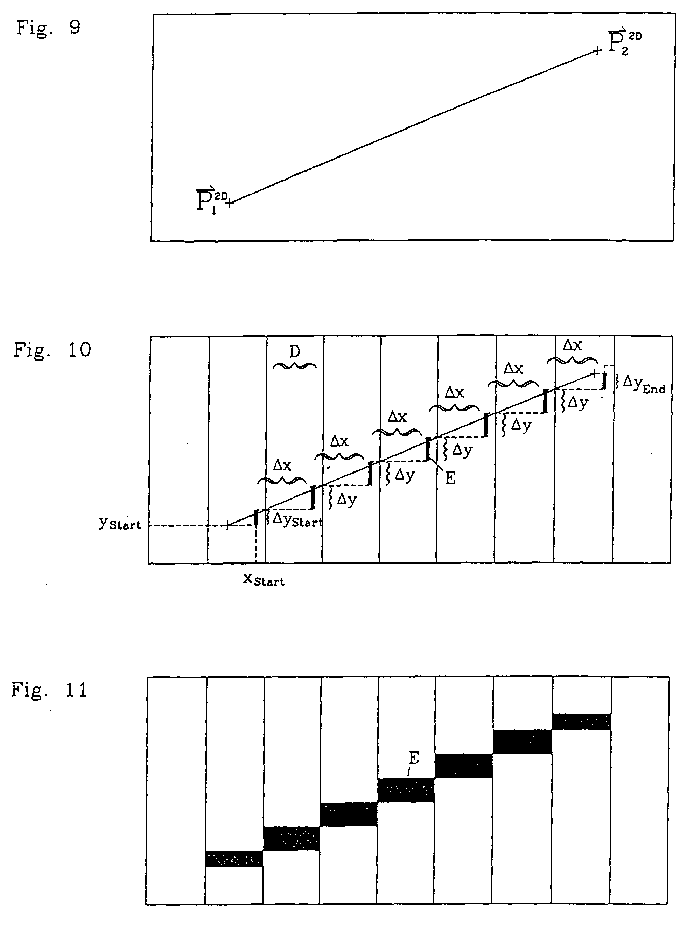

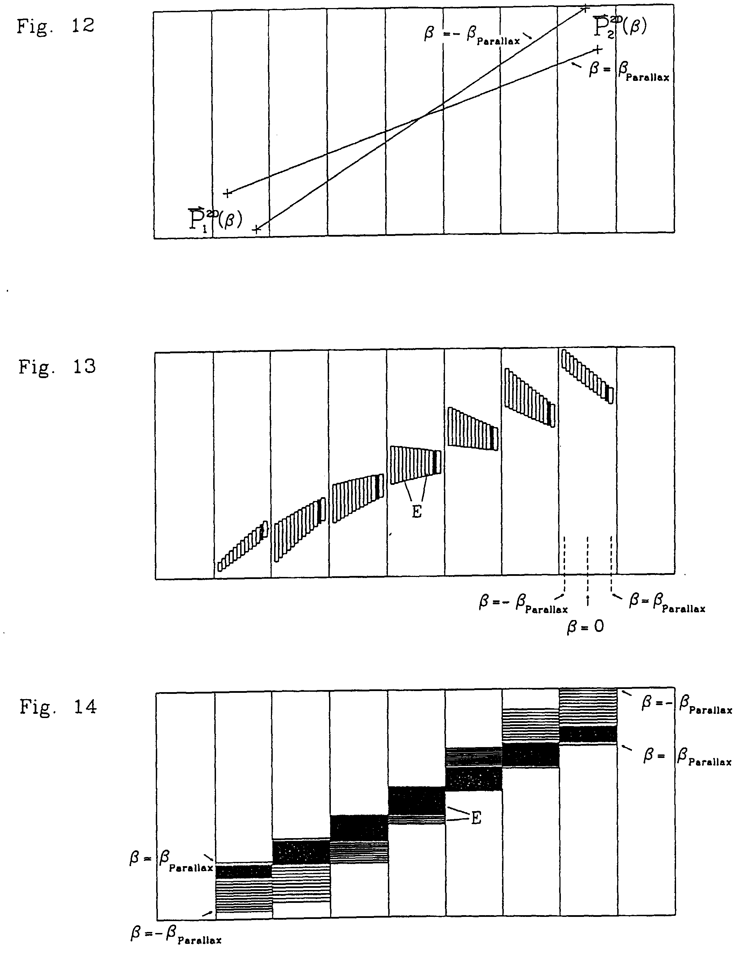

Die Figuren 9 bis 11 zeigen für den exemplarischen Fall eines geraden Linienelements in der Ebene der Ansicht (Fig. 9) die entsprechende graphische Struktur (Fig. 10) und das endgültige virtuelle Bild dieser Struktur (Fig. 11) durch ein aufgebrachtes Zylinderlinsenarray.
Die Ansicht zum Winkel $\beta$ in Figur 9 korrespondiert mit den senkrechten Linienelementen in Figur 10 (dicke Linien). Die dicken Linienstücke in Figur 10 befinden sich dort, wo jede Zylinderlinse einen Strichfokus zum Ablenkwinkel $\beta$ bildet. Die Regionen der Zylinderlinsen in Figur 10 sind durch senkrechte Linien (Periode D) markiert.
Die Linienstücke werden genau dann in gleiche Winkel $\beta$ (Fig. 6) zur Flächennormalen abgebildet, wenn die horizontale Periode der Linienstruktur mit der Linsenperiode übereinstimmt und die Phase d($\beta$) die Position des Strichfokus zum Winkel $\beta$ beschreibt. Figur 11 zeigt das Bild der graphischen Struktur durch das Linsenarray, wie es nur bei Betrachtung im Winkel $\beta$ zur.

EP 0 760 145 B1

Arraynormalen, senkrecht zur Vertikalen und aus großem Abstand erscheint. Die Helligkeitmodulationen in den Strichfoki der Zylinderlinsen erfüllen jeweils die ganze Breite der einzelnen Linsen, so daß eine lückenlose Folge von Rechtecken auf der Spur der ursprünglichen Linie (Fig. 8) entsteht. Bei hinreichend kleiner Periode D des Linsenarrays und der graphischen Struktur wird aus diesem Bild wieder die Linie aus Figur 9, jedoch mit der virtuellen horizontalen Pixelgröße D.

Den verschiedenen Bereichen der Strichfoki zu unterschiedlichen Winkeln $\beta$ können unterschiedliche Bilder aufmoduliert werden. Durch die Wahl eines speziellen Betrachterstandpunktes im Winkel $\beta$ zur Bildnormalen besteht die Möglichkeit, die einzelnen Bilder wieder zu trennen. Der Eindruck einer 3-dimensionalen Ansicht mit Parallaxe entsteht, wenn die Bilder unterschiedliche Ansichten des 3-dimensionalen Objektes zeigen. Das Bild zum Betrachterwinkel $\beta$ muß dabei der Ansicht bei Wanderung um die Hochachse des Objektes um den Winkel $-\beta$ entsprechen.

Bei einem realen Betrachterstandort B in endlicher Entfernung L vor dem Linsenarray muß das Bündel paralleler Strahlen (Fig. 6) durch solche ersetzt werden, die sich am Ort des Betrachters schneiden (Fig. 8). Das ist durch eine vergrößerte Periode der graphischen Struktur D relativ zur Periode $D_{Zyl}$ des Linsenarrays zu erreichen. In Fig. 8 ist das Verhältnis $1/L$ stark überhöht. Die vergrößerte Periode D der graphischen Struktur folgt aus Geometrieüberlegungen zu:

$$D = D_{Zyl} \cdot \left( 1 + \frac{l}{L} \right)$$

l : Dicke des Linsenarrays = Brennweite f
Werden für mehrere äquidistante Winkel zwischen den extremen Ansichten

$$\beta = -\frac{1}{2}\beta_{Parallax} \text{ bis } \frac{1}{2}\beta_{Parallax}$$

der Linie (Fig. 12) die Strichfolgen analog zu Figur 10 erzeugt, so entstehen komplexe graphische Strukturen wie in Figur 13. Zur Verdeutlichung der korrelierten Bereiche sind nur die Striche einer Ansicht $\beta$ ausgefüllt. Figur 14 zeigt wieder das virtuelle Bild der Struktur durch das Linsenarray. Die Rechtecke, die der Ansicht mit den markierten Strichen in Figur 13 entsprechen, sind wieder ausgefüllt. Die übrigen Strukturen aus Figur 13 erzeugen teilweise überlappende Rechtecke, deren Ränder entsprechend ihrer Verschiebung mit $\beta$ zu sehen sind.

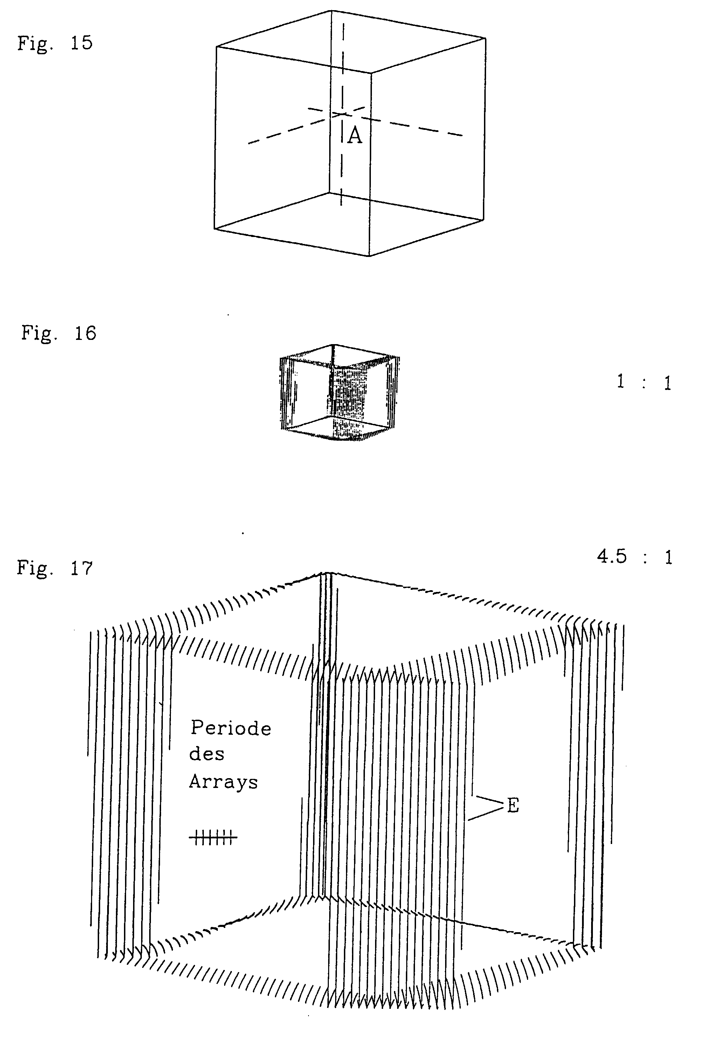

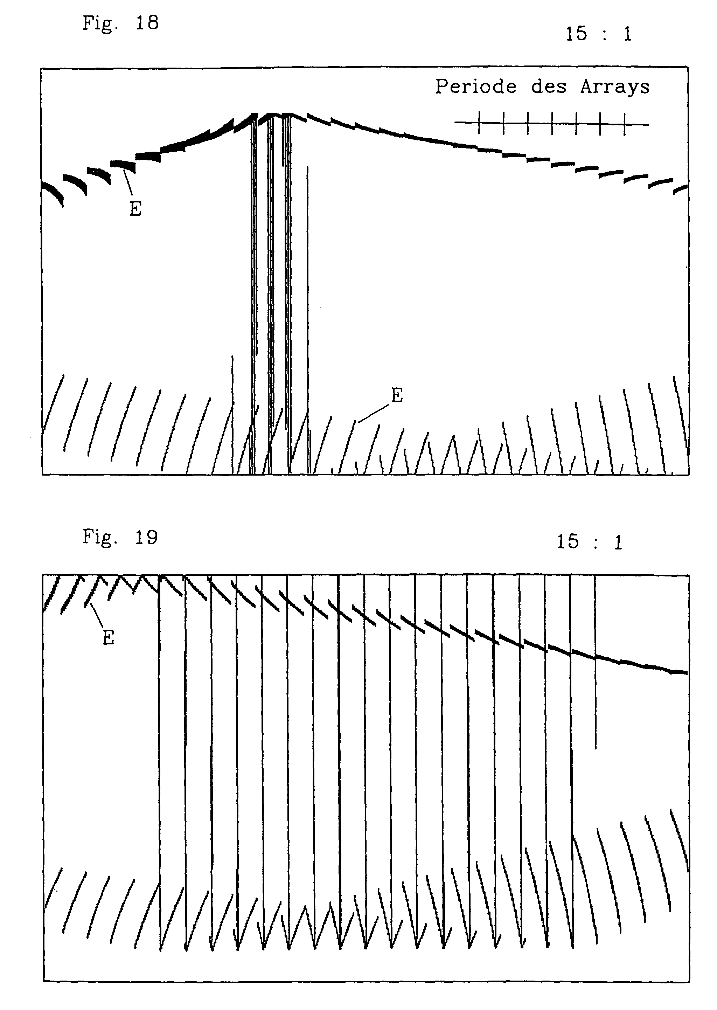

Die Figuren 16 bis 19 zeigen funktionstüchtige graphische Strukturen in verschiedenen Maßstäben für einen Würfel (Fig. 15). In Figur 15 ist der Zielpunkt A der Ansicht markiert. Die Struktur im Maßstab 1:1 (Fig. 16) wurde für ein Linsenarray mit $D_{Zyl} = 0.4$ mm berechnet. Die typischen krummlinigen Vierecke aus Figur 13 finden sich im oberen rechten Bereich der Figur 18 im Ausschnitt der 15-fachen Vergrößerung wieder.

Rechnungen zum 3-D-Bild eines Linienelementes im Raum:

Situation:          Linienelement von $\vec{P}_1$ nach $\vec{P}_2$ im 3-D-Raum, im Winkel $\beta$ zur zentralen Ansicht betrachtet.

Mit den Koordinaten in der Ebene der Ansicht:

$$P_{2D}^i(\beta) = \begin{bmatrix} X_{2D}^i \\ Y_{2D}^i \end{bmatrix} = T_{2D}(T_{Parallax}^{\beta}(T_{view}(\vec{P}_i))) \qquad i = 1, 2$$

und mit der Ordnung von $\vec{P}_{2D}^1$ und $\vec{P}_{2D}^2$ derart, daß $X_{2D}^1 \leq X_{2D}^1$ sei:

$N_1$ = Ganze Teile von D in $X_{2D}^1(\beta)$
$R_1$ = Rest nach Teilen von $X_{2D}^1(\beta)$ durch D
$N_2$ = Ganze Teile von D in $X_{2D}^2(\beta)$
$R_2$ = Rest nach Teilen von $X_{2D}^2(\beta)$ durch D

Die Größen der Strichfolge nach Figur 10:

8

$$X_{Start} = (N_1(\beta) + \tfrac{1}{2}) \cdot D + d(\beta)$$

$$Y_{Start} = Y_{2D}^1(\beta)$$

$$\Delta X = D$$

Fall:

$$X_{2D}^1 \neq X_{2D}^2 :$$

$$\Delta Y = D \cdot \frac{Y_{2D}^2(\beta) - Y_{2D}^1(\beta)}{X_{2D}^2(\beta) - X_{2D}^1(\beta)}$$

$$X_{2D}^1 = X_{2D}^2 :$$

$$\Delta Y = Y_{2D}^2 - Y_{2D}^1$$

$$\Delta Y_{Start} = (1 - R_1) \cdot \Delta Y$$

$$\Delta Y_{End} = R_2 \cdot \Delta Y$$

Mit diesen Größen können Strichfolgen nach Figur 10 in einem Unterprogramm rekursiv erzeugt werden. Diese Liniendaten werden digital gespeichert oder auf einem graphikfähigen Medium direkt ausgegeben.

Schrittweiten für die Variation der Ansichten:

In Figur 12 bleiben die Endpunkte der Linie für alle Ansichten $\beta$ aus dem Bereich $-\beta_{Parallax}$ bis $\beta_{Parallax}$ unterhalb der jeweiligen Zylinderlinse. Im virtuellen Bild mit Linsenarray (Fig. 14) treten entsprechend nur vertikale Verschiebungen der Pixel auf.

Die Strichfolgen aus Figur 13 können sich jedoch auch horizontal über mehrere Linsenbreiten D verlagern, wenn die Parallaxen zwischen den extremen Ansichten der Linie in Figur 12 größer werden. In jedem der durchwanderten Linsenbereiche müssen Teile der Strichfolgen aus Figur 10 vorhanden sein, damit die Bildelemente in der virtuellen Ansicht durch das Linsenarray stetig mit $\beta$ von Linse zu Linse wechseln.

Diese Forderung macht eine Beschränkung der Schrittweiten für $\beta$ notwendig.

Eine obere Schranke für die Schrittweite von $\beta$ und für ein Linienelement von $\vec{P}'''_1 = (x_1, y_1, z_1)$ nach $\vec{P}'''_2 = (x_2, y_2, z_2)$ ist:

$$\Delta\beta = 2 \cdot \arctan(\tfrac{1}{2} \cdot \tfrac{D}{E})$$

mit:

$D$ = Linsenperiode
$E$ = Maximum von $(y_1^2 + z_1^2)^{1/2}$, $(y_2^2 + z_2^2)^{1/2}$

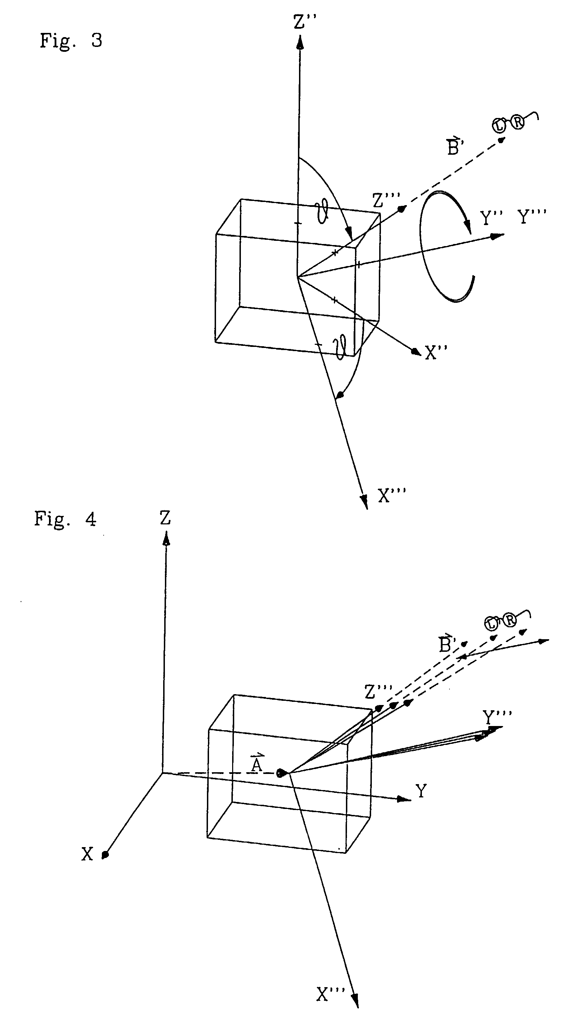

$E$ ist der größte Abstand des Linienelementes von der Drehachse X''' im System S''' (Fig. 4).

Die Schrittweite $\Delta\beta$ wird für jedes Linienelement des Zeichnungsobjektes individuell berechnet und variiert mit dem Abstand vom Ansichtzielpunkt A. Mit der Schrittweite $\Delta\beta$ variiert auch die Anzahl der Ansichten $\beta$ im Intervall von $-\beta_{Parallax}$ bis $\beta_{parallax}$. Der graphischen Struktur insgesamt kann deshalb keine einheitliche Anzahl von Einzelansichten zugeordnet werden.

Figuren 15 bis 19 zeigen die graphische Struktur eines Würfels. Die senkrechte Kante auf der abgewandten Seite in Figur 15 führt zu einer geringeren Anzahl senkrechter Linien im Ausschnitt Fig. 18, als die vordere senkrechte Kante in Ausschnitt Fig. 19. Aufgrund der größeren Entfernung der vorderen Kante zum Ansichtszielpunkt A und der größeren Parallaxe sind mehr Ansichten und entsprechend mehr Linien erzeugt worden als für die hintere Kante. Im Bereich der Parallaxen der Würfelkanten werden die überstrichenen Zylinderlinsen lückenlos an der Erzeugung des virtuellen Bildes beteiligt.

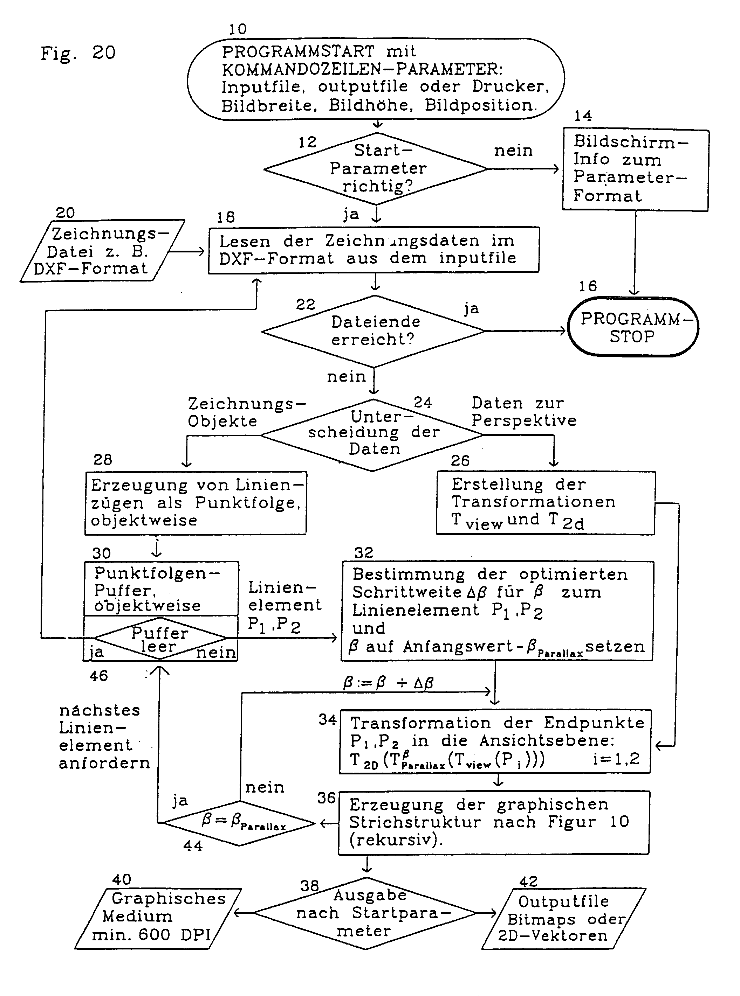

Das Flußdiagramm in Figur 20 verwendet die vorausgehenden Herleitungen und Bezeichnungen und beschreibt das Programm zur Erzeugung der graphischen Strukturen für die 3-D-Bilder.

In Schritt 10 wird ein Programm zur Berechnung des Panoramagramms aufgerufen. Dabei wird durch den Benutzer spezifiziert, aus welcher Quelle (input file) die Daten des dreidimensionalen Objekts übernommen werden sollen, und ob das berechnete Panoramagramm unmittelbar ausgedruckt oder in einer Datei (output file) gespeichert werden soll. Außerdem werden die Breite und Höhe des Bildfensters sowie die Position des Bildes (des Ansichtszielpunktes) innerhalb dieses Fensters festgelegt.

In Schritt 12 wird überprüft. ob das Programm mit den in Schritt 10 spezifizierten Parametern ausgeführt werden kann. Falls dies nicht der Fall ist, erfolgt in Schritt 14 eine Fehlermeldung, und das Programm wird mit Schritt 16 beendet.

Wenn in Schritt 12 festgestellt wurde, daß die eingegebenen Parameter für einen Programmlauf geeignet sind, so werden in Schritt 18 die ersten Daten aus der Quellendatei 20 (input file) gelesen. Die Quellendatei 20 enthält einerseits Daten, die die dreidimensionale Struktur eines oder mehrerer Zeichnungs-Objekte angeben, und andererseits Daten, die sich auf die gewünschte perspektivische Darstellung dieser Objekte beziehen.

In Schritt 22 wird überprüft, ob das Ende der Quellendatei erreicht ist. Wenn dies nicht der Fall ist, wird in Schritt 24 unterschieden, ob die gelesenen Daten sich auf die perspektivische Darstellung oder auf die Geometrie der Objekte beziehen. Anhand der Daten zur Perspektive werden in Schritt 26 die oben erwähnten Transformationsmatrizen $T_{view}$ und $T_{2d}$ erstellt. Die gelesenen Daten über die Zeichnungs-Objekte dienen in Schritt 28 zur Erzeugung von Linienzügen, die durch die Anfangs- und Endpunkte einzelner Linienelemente definiert sind. In Schritt 30 werden die entsprechenden Punktfolgen für das erste Objekt in einem Puffer gespeichert.

Die Koordinaten der Anfangs- und Endpunkte $P_1$, $P_2$ der Linienelemente werden in Schritt 32 aus dem Puffer gelesen, die Schrittweite $\Delta\beta$ für das betreffende Linienelement wird bestimmt, und der Betrachtungswinkel $\beta$ wird auf den Anfangswert $-\beta_{Parallax}$ gesetzt. In Schritt 34 wird anhand der Transformationsmatrizen $T_{view}$, $T_{2d}$ sowie anhand der Transformationsmatrix $T^{\beta}_{Parallax}$ für den jeweiligen Wert $\beta$ das Linienelement in die Ansichtsebene transformiert und so ein Teilbild des Linienelements für den Anfangswinkel $\beta$ erstellt. Dieses Teilbild wird dann in Schritt 36 entsprechend der Periode des Linsenarrays gerastert, d.h., es werden die Positionen der strichförmigen Teilbildelemente E nach Figur 10 berechnet. Die berechneten Teilbildelemente werden in Schritt 38 entweder auf ein graphisches Ausgabemedium, beispielsweise einen Drucker ausgegeben oder in einer Datei 42 (output file) für die spätere Verwendung gespeichert. Die Schritte 34 und 36 werden rekursiv für schrittweise um $\Delta\beta$ erhöhte Winkel $\beta$ wiederholt, bis in Schritt 44 festgestellt wird, daß der Winkel $\beta$ den Maximalwert $\beta_{Parallax}$ erreicht hat.

Nachdem so alle Teilbilder des Linienelements erstellt wurden, wird in Schritt 46 überprüft, ob der in Schritt 30 gefüllte Puffer noch weitere Linienelemente enthält. Wenn dies der Fall ist, werden die Schritte 32 bis 46 für das nächste Linienelement wiederholt. Wenn das letzte Linienelement des Objekts abgearbeitet wurde, erfolgt von Schritt 46 ein Rücksprung zu Schritt 18, und es werden die Daten für das nächste Objekt gelesen. Wenn in der Quellendatei 20 für die verschiedenen Objekte unterschiedliche Daten zur Perspektive gespeichert sind, so können vor der Bearbeitung des nächsten Objekts die Transformationsmatrizen in Schritt 26 geändert werden.

Wenn in Schritt 22 festgestellt wird, daß das Ende der Quellendatei erreicht ist, wird das Programm mit Schritt 16 beendet.

## Patentansprüche

1. Verfahren zum Erzeugen räumlich wirkender Bilder dreidimensionaler Objekte auf einem zweidimensionalen Bildwiedergabemedium nach dem Prinzip von Parallax-Panoramagrammen mit Hilfe eines in Betrachtungsrichtung unmittelbar vor dem Bildwiedergabemedium angeordneten Linsenarrays, bei dem anhand gespeicherter Daten über die dreidimensionale Struktur des Objekts das Parallax-Panoramagramm für eine bestimmte zentrale Ansichtsrichtung sowie für mehrere um die zentrale Ansichtsrichtung variierende Ansichtsrichtungen berechnet wird, wobei die Ansichtsrichtungen durch die Blickrichtung eines imaginären Beobachters des Objekts gegeben sind, der seine Betrachtungsposition variiert und dabei den Blick stets auf einen bestimmten Zielpunkt des Objekts gerichtet hält, und wobei das berechnete Parallax-Panoramagramm, das für jeden Bildpunkt des dreidimensionalen Ob¶jekts mehrere jeweils unterschiedlichen Ansichtsrichtungen zugeordnete 2D-Bildelemente (E) enthält, auf dem Bildwiedergabemedium dargestellt wird, dadurch **gekennzeichnet**, daß für jedes Element des dreidimensionalen Objekts die Anzahl der berechneten 2D-Bildelemente gesondert, in Abhängigkeit vom Ausmaß der parallaktischen Verschiebung bestimmt wird, die der betreffende Teil des Objekts bei der Variation der Betrachtungsposition des imaginären Beobachters erfährt.

**2.** Verfahren nach Anspruch 1, dadurch **gekennzeichnet,** daß die Ansichtsrichtungen innerhalb eines für das gesamte Objekt einheitlichen Intervalls $[-\beta_{Parallax}, +\beta_{Parallax}]$ schrittweise um die zentrale Ansichtsrichtung variiert werden und daß die Schrittweite $\Delta\beta$ dieser Variation anhand des Ausmaßes der parallaktischen Verschiebung des betreffenden Teils des Objekts bestimmt wird.

**3.** Verfahren nach einem der vorstehenden Ansprüche, dadurch **gekennzeichnet**, daß die Variation der Ansichtsrichtungen um die zentrale Ansichtsrichtung herum auf ein Intervall $[-\beta_{Parallax}, +\beta_{Parallax}]$ begrenzt wird, das dem Bereich der mit einer einzelnen Linse des Linsenarrays maximal erzielbaren Ablenkwinkel zur Bildnormalen entspricht.

**4.** Verfahren nach einem der vorstehenden Ansprüche, dadurch **gekennzeichnet**, daß als Linsenarray ein Array aus Zylinderlinsen verwendet wird.

**5.** Verfahren nach Anspruch 4, dadurch **gekennzeichnet**, daß das Objekt durch eine Folge von geraden Linienelementen dargestellt wird und daß die Teilbilder für jedes Linienelement und jede Ansichtsrichtung berechnet werden, indem das Linienelement entsprechend den von ihm überstrichenen Zylinderlinsen in Abschnitte aufgeteilt wird und jedem Abschnitt ein Teilbildelement in der Form eines parallel zu den Zylinderlinsen verlaufenden Striches zugeordnet wird, dessen Position und Länge in der Richtung parallel zu den Zylinderlinsen der Projektion des entsprechenden Abschnitts auf die Achse der Zylinderlinse entspricht und dessen Position in der Richtung senkrecht zu den Zylinderlinsen entsprechend den Abbildungseigenschaften der Zylinderlinsen durch die Richtung zum Betrachter bestimmt ist.

**6.** Verfahren nach Anspruch 5, dadurch **gekennzeichnet**, daß die Positionen der Teilbildelemente in der Richtung senkrecht zu den Zylinderlinsen in bei zug auf eine scheinbare Periode D des Linsenarrays berechnet werden, die durch die folgende Formel gegeben ist

$$D = D_{Zy1} \cdot (1 + 1/L),$$

wobei $D_{Zyl}$ die tatsächliche Breite der Zylinderlinsen, L der zugrunde gelegte Abstand des Betrachters von der Ebene des Bildwiedergabemediums und 1 die im wesentlichen mit der Brennweite übereinstimmende Dicke des Linsenarrays ist.

**7.** Verfahren nach einem der vorstehenden Ansprüche, dadurch **gekennzeichnet**, daß die dreidimensionale Struktur des Objekts durch Ortsvektoren von Punkten (P) des Objekts gegeben ist, daß diese Ortsvektoren in ein kartesisches Koordinatensystem $(X''', Y''', Z''')$ transformiert werden, dessen Ursprung in dem angenommenen Ansichtszielpunkt (A) liegt, auf den der Blick des Betrachters gerichtet ist, wobei eine Achse $(Z''')$ des Koordinatensystems der zentralen Ansichtsrichtung entspricht, während die beiden übrigen Achsen $(X''', Y''')$ der Höhe und Breite des Bildwiedergabemediums entsprechen, und daß die Variationen der Ansichtsrichtung durch Koordinatentransformationen simuliert werden, die Drehungen um die in Richtung der Höhe des Bildwiedergabemediums verlaufende Achse $(X''')$ entsprechen.

## Claims

**1.** Process for producing spatially effective images of three-dimensional objects on a two-dimensional image reproduction medium according to the principle of parallax-panoramagrams by means of a lens array arranged immediately in front of the image reproduction medium in the view direction, wherein the parallax-panoramagram for a specific central view direction and also for a plurality of view directions varying around said central view direction is calculated on the basis of stored data on the three-dimensional structure of the object, wherein the view directions are given by the direction of view of an imaginary observer of the object who varies his observation position while continuously having directed his glance onto a specific target point of the object, and wherein the calculated parallax-panoramagram, which includes for each image point of the three-dimensional object a plurality of 2D-image elements (E) respectively associated with different view directions, is reproduced on the image reproduction medium, **characterized** in that the number of calculated 2D-image elements for each element of the three-dimensional object is determined separately on the basis of the extent of the parallactic shift which the corresponding part of the object experiences during the variation of the observation position of the imaginary observer.

**2.** Process according to claim 1, **characterized** in that the view directions are varied stepwise around the central view direction within an interval [-$\beta_{Pa\,rallax}$, +$\beta_{Parallax}$] which is uniform for the total object, and that the step width $\Delta\beta$ of this variation is determined on the basis of the extent of the parallactic shift of the respective part of the object.

**3.** Process according to one of the preceding claims, **characterized** in that the variation of view directions around the central view direction is limited to an interval [-$\beta_{Parallax}$, +$\beta_{Parallax}$] which corresponds to the range of deflection angles from the image normal line that can maximally be obtained with an individual lens of the lens array.

**4.** Process according to one of the preceding claims, **characterized** in that an array of cylindrical lenses is used as the lens array.

**5.** Process according to claim 4, **characterized** in that the object is represented by a sequence of straight line elements and that the sub-images for each line element and each view direction are calculated by sub-dividing the line element into sections corresponding to the cylindrical lenses covered by the line element, and by assigning to each segment a sub-image element in the form of a line running parallel to the cylindrical lens, the position and length of said line in the direction parallel to the cylindrical lenses corresponding to the projection of the corresponding segment onto the axis of the cylindrical lens, and the position of said line in the direction perpendicular to the cylindrical lenses being determined by the direction towards the observer in accordance with the imaging properties of the cylindrical lenses.

**6.** Process according to claim 5, **characterized** in that the positions of the sub-image elements in the direction perpendicular to the cylindrical lenses are calculated with respect an apparent period D of the lens array, which is given by the following formula:

$$D = D_{Zyl} \cdot (1 + 1/L).$$

wherein $D_{Zyl}$ is the actual width of the cylindrical lenses, L is the basic distance of the observer from the plane of the image reproduction medium, and 1 is the thickness of the lens array which essentially agrees with the focal distance.

**7.** Process according to one of the preceding claims, **characterized** in that the three-dimensional structure of the object is given by position vectors of points (P) of the object, that these position vectors are transformed into a Cartesion coordinate system (X''', Y''', Z''') the origin of which lies in the assumed target point of view (A) onto which the glance of the observer is directed, one axis (Z''') of the coordinate system corresponding to the central view direction and the two remaining axes (X''', Y''', Z''') corresponding to the height and width of the image reproduction medium, and that the variations in the view direction are simulated by coordinate transformations which correspond to rotations around the axis (X''') running in the direction of the height of the image reproduction medium.

**Revendications**

**1.** Procédé de production d'images en relief d'objets tridimensionnels sur un support bidimensionnel de restitution d'image selon le principe des panoramagrammes parallaxes à l'aide d'un agencement de lentilles disposées, dans la direction d'observation, juste devant le support de restitution d'image, dans lequel, sur la base de données mémorisées sur la structure tridimensionnelle de l'objet, le panoramagramme parallaxe est calculé pour une direction de vision centrale déterminée et pour plusieurs directions de vision variant autour de la direction de vision centrale, les directions de vision étant données par la direction de visée d'un observateur imaginaire de l'objet qui fait varier sa position d'observation tout en maintenant le regard en permanence sur un point de mire déterminé de l'objet, et le panoramagramme parallaxe calculé, qui contient pour chaque point d'image de l'objet tridimensionnel plusieurs éléments d'image bidimensionnels (E) associés chacun à des directions de vision différentes, étant représenté sur le support de restitution d'image, caractérisé en ce que, pour chaque élément de l'objet tridimensionnel, le nombre d'éléments d'image bidimensionnels calculés est déterminé séparément en fonction de l'amplitude du déplacement parallactique que la partie correspondant de l'objet subit lorsque la position d'observation de l'observateur imaginaire varie.

**2.** Procédé selon la revendication 1, caractérisé en ce que les directions de vision varient pas à pas autour de la direction de vision centrale à l'intérieur d'un intervalle [-$\beta_{parallaxe}$, +$\beta_{parallaxe}$] unique pour l'ensemble de l'objet, et en ce que la longueur de pas $\Delta\beta$ de cette variation est définie sur la base de l'amplitude du déplacement parallactique de la partie correspondante de l'objet.

3. Procédé selon une des revendications précédentes, caractérisé en ce que la variation des directions de vision autour de la direction de vision centrale est limitée à un intervalle (-$\beta_{parallaxe}$, +$\beta_{parallaxe}$) qui correspond à la plage de l'angle de déviation maximal pouvant être obtenu, par rapport à la normale de l'image, avec une seule lentille de l'agencement de lentilles.

4. Procédé selon une des revendications précédentes, caractérisé en ce que l'agencement de lentilles utilisé est un agencement de lentilles cylindriques.

5. Procédé selon la revendication 4, caractérisé en ce que l'objet est représenté par une série d'éléments linéaires rectilignes, et en ce que les images partielles correspondant à chaque élément linéaire et à chaque direction de vision sont calculées en divisant l'élément linéaire en tronçons en fonction des lentilles cylindriques qu'il balaie et en associant à chaque tronçon un élément d'image partielle sous la forme d'un trait qui s'étend parallèlement aux lentilles cylindriques, dont la position et la longueur dans la direction parallèle aux lentilles cylindriques correspondent à la projection du tronçon correspondant sur l'axe de la lentille cylindrique et dont la position dans la direction perpendiculaire aux lentilles cylindriques est déterminée, en fonction des propriétés de reproduction des lentilles cylindriques, par l'orientation par rapport à l'observateur.

6. Procédé selon la revendication 5, caractérisé en ce que la position des éléments d'images partielles dans la direction perpendiculaire aux lentilles cylindriques est calculée en référence à une période apparente D de l'agencement de lentilles qui est donnée par la formule suivante :

$$D = D_{Zyl} \cdot (1 + 1/L),$$

$D_{Zyl}$ étant la largeur réelle des lentilles cylindriques, L la distance retenue de l'observateur au plan du support de restitution d'image, et 1 l'épaisseur de l'agencement de lentilles coïncidant sensiblement avec la distance focale.

7. Procédé selon une des revendications précédentes, caractérisé en ce que la structure tridimensionnelle de l'objet est donnée par des vecteurs de position de points (P) de l'objet, en ce que ces vecteurs de position sont transformés dans un système de coordonnées cartésiennes (X''', Y''', Z''') dont l'origine se trouve au point de visée admis (A) vers lequel est dirigé le regard de l'observateur, un axe (Z''') du système de coordonnées correspondant à la direction de vision centrale tandis que les deux autres axes (X''', Y''') correspondent à la hauteur et à la largeur du support de restitution d'image, et en ce que les variations de la direction de vision sont simulées par des transformations de coordonnées qui correspondent à des rotations autour de l'axe (X''') s'étendant dans le sens de la hauteur du support de restitution d'image.

Fig. 1

Fig. 2

Fig. 3

Fig. 4

Fig. 5

Fig. 6

Linsenarray

β

Unterlage mit
graphischer Struktur

d

D

Fig. 7

β Parallax

D

Fig. 8

B

Standort des
Betrachters

L

D_{Zyl}

D

Fig. 9

$\vec{P}_2^{2D}$

$\vec{P}_1^{2D}$

Fig. 10

D

$\Delta x$

$\Delta x$

$\Delta x$

$\Delta x$

$\Delta x$

$\Delta x$

$\Delta y_{End}$

$\Delta y$

$\Delta y$

$\Delta y$

E

$\Delta y$

$\Delta y$

$y_{Start}$

$\Delta y_{Start}$

$x_{Start}$

Fig. 11

E

18

Fig. 12

$\beta = -\beta_{Parallax}$

$\vec{P}_2^{2D}(\beta)$

$\beta = \beta_{Parallax}$

$\vec{P}_1^{2D}(\beta)$

Fig. 13

E

$\beta = -\beta_{Parallax}$   $\beta = \beta_{Parallax}$

$\beta = 0$

Fig. 14

$\beta = -\beta_{Parallax}$

$\beta = \beta_{Parallax}$

$\beta = \beta_{Parallax}$

E

$\beta = -\beta_{Parallax}$

Fig. 15

Fig. 16

1 : 1

4.5 : 1

Fig. 17

Periode
des
Arrays

++|+|+

E

Fig. 18

15 : 1

Periode des Arrays

E

E

Fig. 19

15 : 1

E

Fig. 20

**10**
PROGRAMMSTART mit
KOMMANDOZEILEN−PARAMETER:
Inputfile, outputfile oder Drucker,
Bildbreite, Bildhöhe, Bildposition.

**12** Start−
Parameter
richtig? → nein → **14** Bildschirm−
Info zum
Parameter−
Format

ja ↓

**20** Zeichnungs−
Datei z. B.
DXF−Format → **18** Lesen der Zeichnungsdaten im
DXF−Format aus dem inputfile

**22** Dateiende
erreicht? → ja → **16** PROGRAMM−
STOP

nein

Zeichnungs−
Objekte ← **24** Unter−
scheidung der
Daten → Daten zur
Perspektive

**28** Erzeugung von Linien−
zügen als Punktfolge,
objektweise

**26** Erstellung der
Transformationen
$T_{view}$ und $T_{2d}$

**30** Punktfolgen−
Puffer,
objektweise

Puffer
leer
ja    nein

**46**
nächstes
Linien−
element
anfordern

Linien−
element
$P_1, P_2$ →

**32** Bestimmung der optimierten
Schrittweite $\Delta\beta$ für $\beta$ zum
Linienelement $P_1, P_2$
und
$\beta$ auf Anfangswert $-\beta_{Parallax}$ setzen

$\beta := \beta + \Delta\beta$

**34** Transformation der Endpunkte
$P_1, P_2$ in die Ansichtsebene:
$T_{2D}(T_{Parallax}^{\beta}(T_{view}(P_i)))$      $i = 1, 2$

ja    nein

**44** $\beta = \beta_{Parallax}$

**36** Erzeugung der graphischen
Strichstruktur nach Figur 10
(rekursiv).

**40** Graphisches
Medium
min. 600 DPI ← **38** Ausgabe
nach Startpara−
meter → **42** Outputfile
Bitmaps oder
2D−Vektoren